# EUROPEAN PATENT SPECIFICATION

(11) **EP 0 575 449 B1**
(45) Date of publication and mention of the grant of the patent: **11.01.1995**
(21) Application number: 92907125.6
(22) Date of filing: 04.03.1992
(51) Int. Cl.: B65B 9/20

(54) **VERTICAL PACKAGING MACHINE WITH TWO OPPOSITELY POSITIONED FORMING TUBES**
VERTIKALE VERPACKUNGSMASCHINE MIT ZWEI EINANDER GEGENÜBER ANGEORDNETEN FORMROHREN
MACHINE D'EMPAQUETAGE VERTICAL POURVUE DE DEUX TUBES DE FORMAGE OPPOSES

(30) Priority: 11.03.1991 IT BO910067
(43) Date of publication of application: 29.12.1993
(73) Proprietor: ICA S.p.A., I-40127 Bologna (IT)
(72) Inventor: RAPPARINI, Gino, I-40139 Bologna (IT)
(74) Representative: Beszédes, Stephan G., Dr.
(86) International application number: PCT/IT92/00022
(87) International publication number: WO 92/15485

(56) References cited:
- DE-A- 2 730 169
- GB-A- 1 065 144

## Description

### BACKGROUND ART

There are well-known packaging machines with only one forming tube made up of one vertical packaging group set on the frontal face of a supporting structure. Said structure is equipped with a horizontal station that performs the transversal sealing of the packets through a thermosealing pincer. In these packaging machines, the film is supplied by a roll, is tubulearly formed on a forming tube, and is welded longitudinally. This continuous tube of flexible material is pushed down by belts cooperating with said forming tube and is filled with the conditioning products to obtain finished packets by using a thermosealing pincer.

Side by side positioned vertical packaging machines are described and illustrated by the following documents :
FR-A-2 250 676
DE-A-2 703 455
US-A-4 081 943
GB-A-1 065 144
Said configurations consist of two separate vertical forming groups which are put side by side on the same wall of the supporting structure, rather than being positioned on the opposite sides of a central construction.

It must be pointed out that each forming group has its own transverse sealing station.

Specifically, GB-A-1 0065 144 shows only one elongated clamp to hug both forming tubes. Said elongated clamp is set for two motions: one vertically reciprocating motion and one horizontal motion to open and to close.

The problem to be solved is to build a machine with two forming tubes and one single transversal sealing station.

Such structural and kinematic configuration results in a better performance, cheaper costs and smaller overall dimensions than those given by the sum of the characteristics of two conventional machines with only one forming tube.

The kinematic motions and the structural features described and illustrated in the prior patents imply instead a cumbersome and not economical configuration with a non satisfactory performance.

This invention proposes a valid and simple answer to the above described problems.

### DESCRIPTION

The invention is now detailly described with reference to the drawing, the figure of said drawing showing a schematic form of the packaging machine according to the invention.

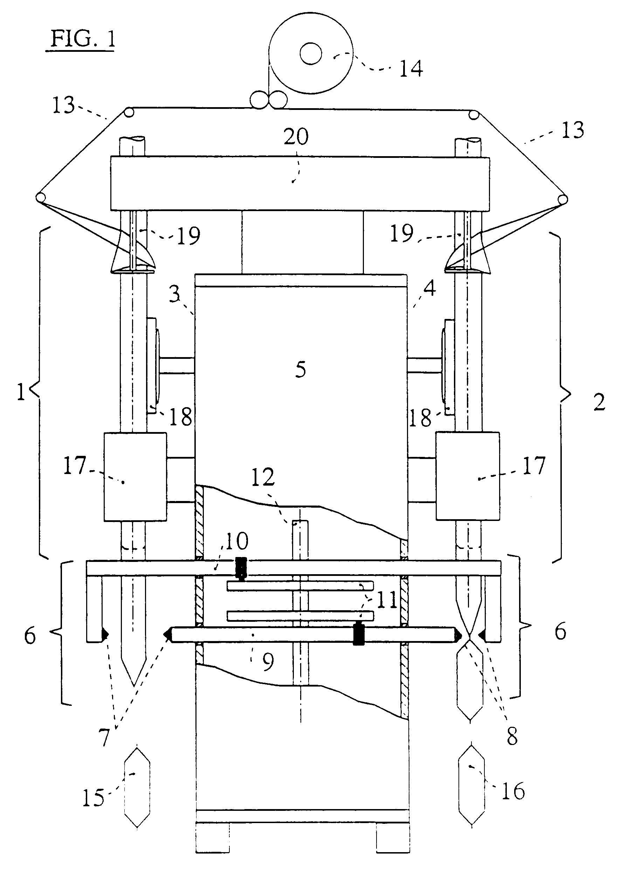

In this figure the following reference signs relate to the following constructional elements:
(1) first packaging vertical group on the left side
(2) second packaging vertical group on the right side
(3) left side of the central structure
(4) right side of the central structure
(5) central structure
(6) bilateral horizontal station for the transversal thermosealings
(7) first thermosealing pincer on the left side
(8) second thermosealing pincer on the right side
(9) connection rod between the inside jaws of the first and of the second pincer
(10) connection rod between the outside jaws of the first end of the second pincer
(11) kinematic motions of the translation of the connecting rods
(12) central shaft for the rotation of the kinetatic motions
(13) ribbon of the packaging material
(14) roll of the packaging material
(15) finished packet on the left side
(16) finished packet on the right side
(17) vertical driving belts
(18) devices for the longitudinal sealing
(19) vertical forming tubes
(20) crossbar supporting two forming tubes
Examining figure 1 in detail one can see that station 6 is able to perform transversal sealing on both sides 3 and 4 of the central structure 5.

The connection rods 9 and 10 cross the central structure 5, come out from both sides 3 and 4 and link the inside and the outside jaws of the pincers 7 and 8.

The is provided a single central shaft 12.

Through the kinematic motions 11 the rotation of this shaft enables the translation of rods 9 and 10 in order to open and close both pincers 7 and 8.

The advantage obtained by the bilateral station 6 of this configuration is evident. Compared with the utilization of two conventional stations, the technical solution offered by the invention provides a smaller overall dimension of the machine, and an easier an cheaper way of realization and use.

The kinematic motions of the transversal sealing pincers can be obtained using electriopneumatic devices.

The rods 9 and 10 instead of linking both inside and outside jaws, can link alternatively one inside jaw with one outside jaw.

## Claims

1. Vertical form-fill-sealing packaging machine comprising two separate tube form-fill and sealing groups (1), (2) on opposite sides of the machine which is fed by a single web (14) of packaging material slit into two webs (13), each of said form-fill-sealing groups comprising a forming shoulder (19) to form said web into a tubular shape, a longitudinal sealing means (18), a web feeding means (17) for stepwise feeding the tube in predetermined packaging lengths into a sealing device (7), (8) to provide the transverse seal of the package characterized in that the sealing devices (7), (8) are mounted on opposite lateral sides of a stationary central sealing station (6) mounted in a central frame (5), and in that each sealing device comprises a pair of horizontally reciprocatable sealing and countersealing means (7), (8), the pairs of said sealing devices being moved alternatively into a tube engagement position to provide the transversal package seal.

2. Vertical form-fill-sealing packaging machine according to claim 1 characterized in that a central rotatable shaft (12) carries cam means (11) cooperating with the pairs of sealing and countersealing means (7), (8) to provided said alternate reciprocating motions.

3. Vertical form-fill-sealing packaging machine according to the previous claims characterized in that both, the sealing and coutersealing means (7), (8), are provided at respective opposite ends of supporting rods (9), (10), each of said rods carrying a cam follower engagable with said cam means (11).

## Patentansprüche

1. Vertikale Form/Füll/Versiegelungs-Verpackungsmaschine, umfassend zwei getrennte Rohr-Form/Füll- und Versiegelungsgruppen (1), (2) an zwei gegenüberliegenden Seiten der Maschine, die durch eine einzelne Endlosbahn (14) Von Verpackungsmaterial, das in zwei Bahnen (13) eingeschoben wird, gespeist wird, wobei jede der Form/Füll-Versiegelungsgruppen eine Auflage zum Formen (19) umfaßt, um die Bahn rohrförmig zu formen, eine längsgerichtete Versiegelungseinrichtung (18), eine Vorrichtung für die Zufuhr von Bahnen (17) für die schrittweise Zuführung zum Rohr in vorher festgelegten Verpackungslängen in die Versiegelungsvorrichtungen (7), (8), um die Transversalversiegelung des Pakets bereitzustellen, **dadurch gekennzeichnet**, daß eine Versiegelungsvorrichtung (7), (8) auf gegenüberliegenden Seitenteilen einer stationären Zentralversiegelungsstation (6), die in einem Zentralteil (5) untergebracht ist, angeordnet sind, und dadurch, daß jede Versiegelungsvorrichtung ein Paar von horizontal sich hin und her bewegenden Versiegelungs- und Gegenversiegelungseinrichtungen (7), (8) umfaßt, wobei die Paare der Versiegelungsvorrichtungen wechselseitig in eine die Rohre verbindende Position geführt werden, um für die transversale Paketversiegelung zu sorgen.

2. Vertikale Form/Füll/Versiegelungs-Verpackungsmaschine nach Anspruch 1, **dadurch gekennzeichnet**, daß eine zentrale, rotierbare Welle (12) mit einer Mitnehmervorrichtung (11) ausgerüstet ist, welche mit den Paaren der Versiegelungs- und Gegenversiegelungseinrichtung (7), (8) zusammenwirkt, um für die wechselseitigen Hin- und Herbewegungen zu sorgen.

3. Vertikale Form/Füll/Versiegelungs-Verpackungsmaschine nach den vorgenannten Ansprüchen**, dadurch gekennzeichnet**, daß sowohl die Versiegelungs- als auch die Gegenversiegelungseinrichtung (7), (8) an jeweils gegenüberliegenden Seiten der Stützstangen (9), (10) bereitgestellt sind, wobei jede der Stangen mit einem Nockenstößel ausgerüstet ist, welcher mit der Mitnehmereinrichtung (11) zusammenwirken kann.

## Revendications

1. Machine d'empaquetage vertical comportant deux tubes de formage et de scellement (1), (2) sur des cotés opposés de la machine qui est alimentée par un seul rouleau (14) de matériau d'emballage fendu en deux bandes (13), chacun desdits groupes de formage et de scellement comportant un épaulement de formage (19) pour former ladite bande en forme tubulaire, un moyen de scellement longitudinal (18), un moyen d'alimentation de la bande (17) pour amener pas à pas le tube en longueurs d'emballage prédéterminées au dispositif de scellement (7), (8) pour réaliser la soudure transversale de l'emballage, caractérisée en ce que les dispositifs de scellement (7), (8) sont montés sur des côtés latéraux opposés d'une station centrale de scellement (6) montée sur un cadre central (5), et en ce que chaque dispositif de scellement comporte une paire de moyens de scellement et de contre-scellement (7), (8) horizontaux se déplaçant réciproquement, les paires desdits dispositifs de scellement étant alternativement déplacées dans une position d'engagement avec le tube pour réaliser la soudure d'emballage transversale.

2. Machine d'empaquetage vertical selon la revendication 1, caractérisée en ce qu'un arbre central rotatif (12) porte des moyens à came (11) coopérant avec la paire de moyens de scellement et de contre-scellement (7), (8) pour réaliser lesdits mouvements réciproques alternants.

3. Machine d'empaquetage vertical selon les revendications précédentes, caractérisée en ce que les deux moyens de scellement et de contre-scellement (7), (8) présentent à leurs extrémités opposées respectives des barres d'appui (9), (10), dont chacune porte une roulette pouvant s'engager dans ledit dispositif à came (11).
